# EUROPEAN PATENT APPLICATION

(11) **EP 3 205 399 A1**
(43) Date of publication of application: **16.08.2017**
(21) Application number: 16000330.7
(22) Date of filing: 10.02.2016
(51) Int. Cl.: B01J 35/00, B01J 37/02, C09D 183/04

(54) **METHOD FOR GRAFTING POLYSILOXANES ON SURFACES OF PHOTOCATALYTIC METAL OXIDES, POLYSILOXANE-GRAFTED METAL OXIDE SURFACES AND APPLICATIONS THEREOF**

(71) Applicant: Max-Planck-Gesellschaft zur Förderung der Wissenschaften e.V., 80539 München (DE)
(72) Inventor: WOOH, Dr. Shangyuk, 55131 Mainz (DE); BUTT, Prof. Dr. Hans-Jürgen, 57223 Kreuztal (DE); VOLLMER, Dr. Doris, 55118 Mainz (DE)
(74) Representative: v. Bezold & Partner Patentanwälte - PartG mbB

(57) **Abstract**

The present invention relates to a method for grafting polysiloxanes on surfaces of photocatalytic metal oxides by light illumination which comprises at least the following steps:
a) providing a surface of a photocatalytically active metal oxide;
b) providing a polysiloxane or a mixture of polysiloxanes on the metal oxide surface;
c) irradiating the reaction mixture with light in a wavelength range from 180 nm to 550 nm for a sufficient time to generate reactive moieties in said polysiloxanes and to form covalent Si-O-Me (Me = metal) bonds between said reactive moieties of the polysiloxanes and the metal oxide surface;
d) optionally separating unreacted polysiloxane molecules from the polysiloxane-grafted metal oxide surface;
wherein no silane coupling agent or cross-linking agent needs to be present in the reaction mixture and/or participates in said grafting reaction.

A further aspect of the invention relates to the hydrophobic and photocatalytically active polysiloxane-grafted metal oxide surface obtainable by said method and to articles comprising said surface.

## Description

### Field of the invention

The present invention relates to a method for grafting polysiloxanes on surfaces of photocatalytic metal oxides by light illumination. More specific aspects of the invention relate to the surface modification of photocatalytic metal oxide particles in order to obtain hydrophobic photocatalytic nano-, micro-, or millimeter sized particles and to the generation of surfaces having photocatalytic activity and its applications such as an effective self-cleaning and/or air cleaning surface, water purification surface, UV-blocking hydrophobic self-cleaning surfaces, anti-biofouling surface, and anti-fingerprinting surfaces.

### Background of the invention

Photocatalytic metal oxides (such as TiO₂, ZnO₂, SnO₂, CeO₂, Fe₂O₃, Ag₂O, WO₃, Al₂O₃, Nb₂O₅, ZnS, CuO, MoO₃, ZrO₂, MnO₂, MgO, and V₂O₅) generate free radicals which can undergo secondary reactions by creating electron-hole pairs under light (mostly UV) illumination. Due to their strong photocatalytic activity resulting from free radicals, photocatalytic metal oxides decompose most organic materials and are widely used in research and industry.

However, it is difficult to modify their surface with organic materials as its own photocatalytic activity decomposes covering organics. This considerably limited or prevented various applications of photocatalytic metal oxides.

For example, if the surface of a metal oxide film can be modified with organic materials, desirable functions or properties, such as liquid-repelling or anti-fouling properties, can be imparted.

In addition, if the surface of a metal oxide can be made compatible with non-polar environments, particles can be dispersed in various solvents and such metal oxides can be applied to wider applications.

So far, however, no completely satisfying method for surface modification of photocatalytic metal oxides while maintaining the photocatalytic activity has been reported.

Photocatalytic metal oxides have been coated with organic molecules having special functional groups for grafting such as silane, amine, and carboxylic groups, which attach well on metal oxide surfaces. Those surface modification methods allow to adjust the surface energy of metal oxides (as disclosed in US20100326699) and, thus, enable a better dispersity of metal oxide nanoparticles in polymer matrices (S. M. Khaled et al., Langmuir 2007, 23, 3988-3995). However, after UV irradiation the surfaces reverted to their initial state by photodegradation of surface covering organics. The modified surfaces could not resist photocatalytic activity of metal oxides and the coating was degraded.

A composite can be prepared by physically mixing material of two or more components. Typically, inorganic nanoparticles are dispersed in an organic matrix (e.g. a polymer) for a coating embedding inorganic nanoparticles. To evenly distribute the nanoparticles in the matrix and prevent the particles from aggregation, their surface energy needs to be adjusted. This adjustment is essential as the nanoparticles have a large surface area-to-volume ratio. In general, being able to adjust the surface energy facilitates the use of photo-catalytic metal oxide particles in various applications. However, a conventional surface modification by grafting with functional groups is not long-term stable due to said photocatalytic activity.

Photocatalytic metal oxides were used as composites with several other polymers, e.g. polytetrafluoroethylene (T. Kamegawa et al., Adv. mater 2012, 24, 3697-3700) and poly(methyl methacrylate) (N. Yoshida et al., Thin Solid Films 2006, 502, 108-111). The stability of these materials with respect to photodegradation was not good enough.

Silicone oil (such as polydimethylsiloxane) is known to be rather resistant against degradation by photocatalytic activity (K. Iketani et al., J. Phys. & Chem. Sol. 2003, 64, 507) .

Therefore, there have been various efforts to use photo-catalytic metal oxides together with silicone oils. Using a mixture of photocatalytic metal oxides and silicone oil as a composite is the most prominent method. Photocatalytic metal oxide particle composites with silicone oil showed better stability against photocatalytic degradation. Therefore, silicone oil was applied as a template or binder (M.T.S. Tavares et al., Surf. & Coat. Tech. 2014, 239, 16-19; US5616532) for fixing photocatalytic metal oxides in or on composite films or structures. However silicone oil was not chemically bound on the metal oxide surfaces and did not have good processiblity, only could be applied on limited films.

It is known that siloxanes can be grafted to a metal oxide surface by heating or acids (G. Graffius et al., Langmuir 2014, 30, 14797-14807; J. W. Krumpfer et al., Faraday Discuss. 2010, 146, 103-111; J. W. Krumpfer et al., Langmuir 2011, 27, 11514-11519). Other coupling reactions for siloxanes involve the participation of chemical coupling agents and the presence of suitable functional groups in the respective siloxane molecules.

However, these methods of the prior art are typically slow, energy-consuming and/or are not suitable for polysiloxanes substrate such as PDMS (polydimethylsiloxane) substrate and some substrates, e.g. temperature-sensitive or acid-sensitive substrates.

In view of the drawbacks of the prior art, the main object of the present invention was to provide an improved method for grafting siloxanes and/or polysiloxanes on the surface of photocatalytic metal oxides as well as to provide the corresponding polysiloxane-grafted metal oxide surfaces for a broad range of applications.

This objective has been achieved by providing a novel method for grafting polysiloxanes on the surface of photocatalytically active metal oxides by irradiation with light according to claim 1 and the polysiloxane-grafted metal oxide surface of claim 12. Additional aspects and more specific embodiments of the invention are the subject of further claims.

### Description of the invention

The method of the present invention for grafting polysiloxanes on the surface of photocatalytically active metal oxides comprises at least the following steps:
a) providing a surface of a photocatalytically active metal oxide;
b) providing a siloxane, a polysiloxane or a mixture of polysiloxanes on the metal oxide surface;
c) irradiating the reaction mixture with light including wavelengths in the range from 180 nm to 550 nm for a sufficient time to generate reactive moieties in said polysiloxanes and to form covalent Si-O-Me (Me = metal) bonds between said reactive moieties of the polysiloxanes and the metal oxide surface;
d) optionally separating unreacted molecules from the polysiloxane-grafted metal oxide surface;
wherein no silane coupling agent or cross-linking agent needs to be present in the reaction mixture and/or participates in said grafting reaction.

According to a preferred embodiment, no silane coupling agent or cross-linking agent is present in the reaction mixture and/or participates in said grafting reaction.

Scheme 1 below illustrates a grafting reaction on an exemplary metal oxide surface.

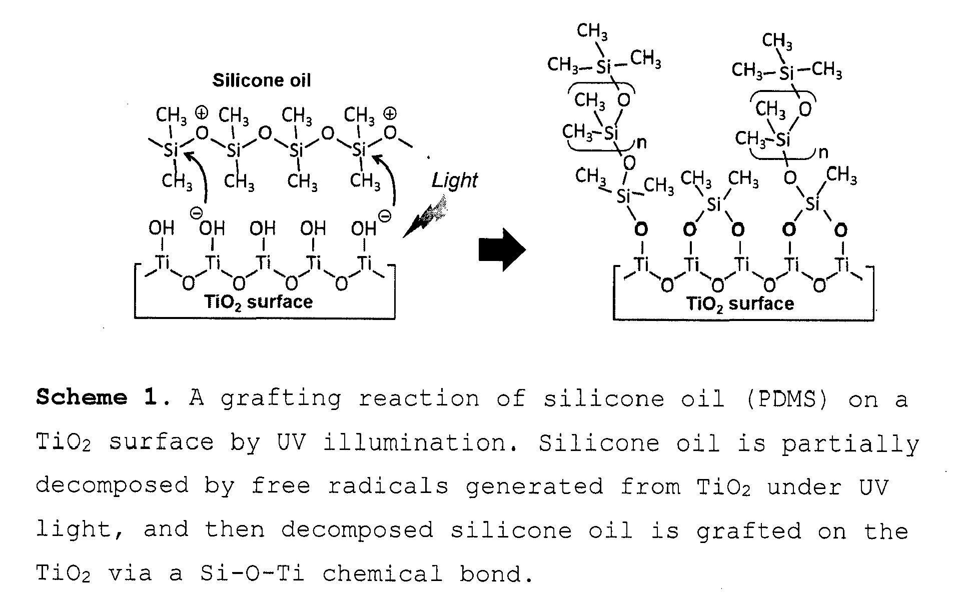

Principally, the siloxane(s) or polysiloxane(s) can be grafted according to the method of the present invention onto the surface of any photocatalytically active metal oxide.

The photocatalytically active metal oxide as used herein may also comprise or represent a plurality of metals or metal oxides and/or the metal of said photocatalytically active metal oxide may also comprise or represent a metal alloy.

The term "metal oxide" as used herein also includes a heterogeneous system of two or more metal oxide mixtures and/or a mixture of a metal oxide with other inorganic material.

More specifically, the metal oxide is selected from the group comprising TiO₂, ZnO₂, SnO2, CeO₂, Fe₂O₃, Ag₂O, WO₃, Al₂O₃, Nb₂O₅, ZnS, CuO, MoO₃, ZrO₂, MnO₂, MgO, and V₂O₅ or a mixture thereof. TiO₂ is especially preferred.

The polysiloxane may be any oligomer or polymer comprising the characteristic siloxane repeating element -(Si-O-Si)-.

The polysiloxane may include organic or inorganic impurities.

More specifically, the polysiloxane comprises or consists of a compound having a repeating element of the general formula - [Si(R₁)(R₂)-O-Si(R₃)(R₄)]ₙ-, wherein n is an integer from 5 to 5,000,000, such as 5 to 1,000,000, preferably from 10 to 100,000, more preferred from 10 to 50,000, and R₁, R₂, R₃, R₄ independent from each other represent H, halogen, an organic residue, in particular alkyl or (per)fluorinated alkyl, or -OSi(R₅)(R₆)(R₇), with R₅, R₆, R₇ being substituents as defined for R₁ to R₄.

Preferably, each alkyl substituent is a C₁-C₁₀ alkyl substituent, such as methyl, ethyl, propyl, butyl etc., or a corresponding (per)fluorinated alkyl substituent.

In one specific embodiment, each substituent R₁ to R₄ (and/or optionally R₅ to R₇) is the same, preferably an alkyl group as defined above. For example, the polysiloxane may be PDMS, preferably having a molecular weight in the range from 0.5 to 10,000 kDa.

In another specific embodiment, the polysiloxane(s) is/are free of functional groups capable to a covalent coupling reaction with the metal oxide surface prior to said irradiation with light.

The intensity of the irradiation may vary over a broad range, i.a. depending on the specific metal oxides and, if present, other substrate materials and of the wavelength of the irradiating light used.

In the method of the present invention, the irradiation is typically performed for a time period in the range from 1 second to 60 minutes or 120 minutes, preferably from 20 seconds to 30 minutes, more preferred in the range from 30 s to 15 minutes, and with an intensity of 0.1 - 10,000 mW/cm⁻², preferably in the range from 0.1 to 100 mW/cm⁻², more preferred in the range from 1 to 60 mW/cm⁻².

Generally, the reaction time depends on the intensity of light illumination and the kind of photocatalytic metal oxide. A longer reaction time is required for lower illumination intensity.

Typically, the light used for irradiation comprises or consists of UV-light in the wavelength range from 200 - 450 nm, in particular UV-A light (315 nm - 400 nm). However, in principle any wavelength range corresponding to an absorption band gap of the respective metal oxide may be used.

Typically, the resulting polysiloxane graft is provided on the metal oxide as a layer having a thickness in the range from 0.5 nm to 50 nm (dry thickness in air), preferably in the range from 1 nm to 25 nm, more preferred in the range from 2 nm to 15 nm.

The photocatalytic metal oxide surface may be any surface suitable to be exposed to the irradiation by light. Said surface may be essentially planar, spherical or 3-dimensionally shaped, smooth, rough or textured, in particular porous.

In one preferred embodiment, the metal oxide surface is the surface of metal oxide particles, in particular of microparticles or nanoparticles.

The metal oxide or metal oxide containing surface may be provided as a film or coating layer on a substrate, in particular on a polymer, ceramic, glass, silicone, metal or heterogeneous substrate, or represent the surface of a bulk metal oxide material.

Said metal oxide surface may be the surface of any article which may benefit from a grafted polysiloxane layer thereupon.

More specifically, the metal oxide surface is the surface of an article selected from the group comprising fabrics, filters, meshes, glassware, including optical devices such as sunglasses, windows, furnishings, objectives, lenses, touchpads, office-, laboratory-, sanitary- or medical equipment, means of transportation, portable devices, construction/building materials, ceramics, tiles, bricks, concretes, particles of cements, paints.

Advantageously, the claimed method does not required elevated temperatures. It can therefore be applied to thermo-sensitive materials and substrates as well.

The present method offers the further important advantage that surfaces which have been damaged can be easily repaired. One only needs to apply the polysiloxane (which easily spreads on the surfaces) and illuminate again with light of a suitable wavelength.

A second aspect of the present invention relates to a hydrophobic and photocatalytically active polysiloxane-grafted metal oxide surface produced by the method as outlined above.

Preferably, the metal oxide is selected from the group comprising TiO₂, ZnO₂, SnO2, CeO₂, Fe₂O₃, Ag₂O, WO₃, Al₂O₃, Nb₂O₅, ZnS, CuO, MoO₃, ZrO₂, MnO₂, MgO, and V₂O₅, the polysiloxane is selected from the group comprising a compound having a repeating element of the general formula -[R₁R₂Si-O-R₃R₄Si]ₙ-, wherein n is an integer from 5 to 1,000,000, preferably from 10 to 100,000, and R₁, R₂, R₃, R₄ independent from each other represent H, halogen, an organic residue, in particular alkyl or (per)fluorinated alkyl, or -OSiR₅R₆R₇, with R₅, R₆, R₇ being substituents as defined for R₁ to R₄, and the polysiloxane graft is provided on the metal oxide as a layer having a thickness in the range from 0.5 nm to 50 nm, preferably in the range from 1 nm to 25 nm, more preferred in the range from 2 nm to 15 nm.

Preferably, the polysiloxane graft is coupled to the metal oxide surface by direct covalent Si-O-Me bonds between the polysiloxane molecules and the metal oxide surface and the polysiloxane graft layer does not comprise any additional linker compound or coupling agent.

In one specific embodiment, said polysiloxane-grafted surface represents or comprises the surface of a micro- or nanoparticle.

The chemically modified photocatalytic metal oxide surface of the invention shows good UV, thermal, and chemical stability.

Since polysiloxanes (silicone oils) are hydrophobic, this chemically modified photocatalytic metal oxide surface becomes hydrophobic, showing contact angles of water with the surface above 70°. Particular matter (liquid or solid droplets, particles, microorganisms, etc.) can be removed more easily from a hydrophobic surface compared to a hydrophilic surface. Hydrophobic surfaces show an improved liquid-repellency. Still, the coated hydrophobic metal oxide surface keeps its photocatalytic activity. Therefore, a protective coating can be combined with improved liquid repellency while maintaining the photocatalytic activity.

A further related aspect of the invention represents an article, in particular a thermo-sensitive article or acid-sensitive article, comprising said polysiloxane-grafted surface.

The term "thermo-sensitive" as used herein refers to a material which cannot withstand higher temperatures, such as higher than, e.g. 50°C, 100°C, or 200°C.

More specifically, said hydrophobic and/or thermo-sensitive and/or acid-sensitive article is selected from the group comprising fabrics, filters, meshes, glassware, including optical devices such as sunglasses, windows, objectives, lenses, touchpads, furnishings, office-, laboratory-, sanitary- or medical equipment, means of transportation, portable devices, construction/building materials, ceramics, tiles, bricks, concretes, particles of cements, paints.

The polysiloxane-grafted surface or the article comprising the same have a broad range of favourable applications in various fields.

Some non-limiting possible applications are:
- Fabrication of self-cleaning surfaces (including solid, elastic, rigid, flat, rough, textured and porous surfaces, filters, meshes and fabrics) that decompose physically attached particulate matter or adsorbed molecules or nano- to micrometer thick films by photocatalytic activity.
- The chemically modified photocatalytic metal oxide surface can decompose soot, fingerprints and oils (which are a major form of indoor air pollution) and also kill bacteria, therefore it can be applied to indoor glasses and surfaces with effective air cleaning and UV blocking properties.
- The chemically modified photocatalytic metal oxide surface can be used for producing an effective self-cleaning glass or anti-fingerprinting screen.
- By using the UV light absorption property of photocatalytic metal oxides, the coating can be applied to glass, for example on sunglass, cars, and all types of windows where blockage of UV light is required or desirable.
- The siloxanes (silicone oil) grafting reaction can also be applied to photocatalytic metal oxide micro- and nanoparticles resulting in an improved dispersibility of the coated particles in non-polar solvents. This yields better processability and flexibility of the mixture or dispersion for various applications of photocatalytic metal oxide micro- and nanoparticles.

Consequently, a further related aspect of the present invention relates to the use of the polysiloxane-grafted surface or of an article comprising the same as, e.g., a biocide, anti-biofouling material, UV-blocker, self-cleaning material, anti-fingerprinting material, building material, photocatalyst, in particular non-polar solvent dispersible photocatalyst.

### Brief Description of the Drawings

**Fig 1** demonstrates the photostability of a polysiloxane-grafted TiO₂ surface prepared by the method of the invention.
**Fig. 2** shows the photodegradation of the organic dye Rhodamine B by the photocatalytic activity of a polysiloxane-grafted TiO₂ surface.
**Fig. 3** shows the photodegradation of hexadecane and glycerol by the photocatalytic activity of a polysiloxane-grafted TiO₂ surface.
**Fig. 4** shows the dispersibility of polysiloxane-grafted TiO₂ nanoparticles in water and toluene.

The following examples are given to illustrate the present invention in more detail, without limiting the same to the specific materials and parameters used in said examples.

### EXAMPLE 1

### Preparation of polyxsiloxane-grafted metal oxide surfaces

Smooth or rough/porous surfaces of photocatalytically active metal oxides, in particular titanium dioxide, were covered with silicone oils (polydimethysiloxanes with various chain lengths (0.5 - 200 kDa)). This can be achieved, e.g., by spreading the silicone oil on the surface or by dipping a metal oxide surface in a polysiloxane filled bath. The covered surface was illuminated with UV-light, typically UV-A light (315 nm - 400 nm), for various time periods, for example 30 s at an intensity of 10 mW/cm⁻², 10 minutes at an intensity of 2 mW/cm⁻², or 60 minutes at an intensity of 0.1 mW/cm⁻².

### EXAMPLE 2

### Characterization of a polysiloxane-grafted TiO₂ surface

The hydrophobicity and photocatalytic properties of polysiloxane-grafted TiO₂ surfaces prepared according to Example 1 were tested.

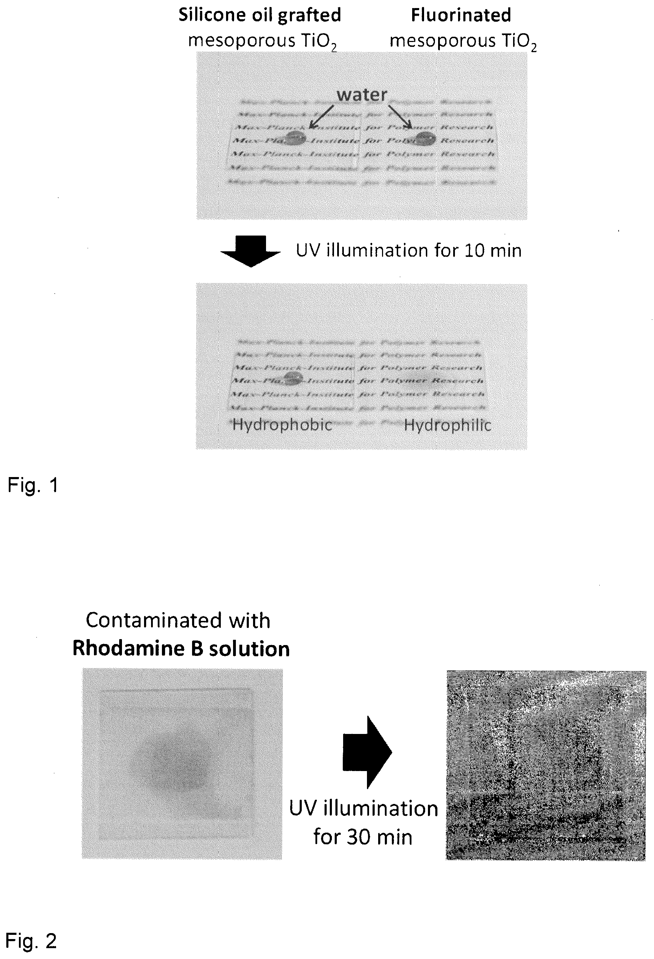

Fig. 1 demonstrates the photostability of a polysiloxane-grafted TiO₂ surface prepared by the method of the invention. TiO₂ surfaces were modified with silicone oil (PDMS 9.7 kDa; illumination with UV-A light for 10 min at 2 mW/cm⁻²) (left top) and fluorocarbon molecules (perfluorooctyl trichlorosilane, right top) to decrease the surface tension und impart hydrophobicity. Under UV illumination for 10 min, the photocatalytic activity of TiO₂ decomposes fluorocarbons on the TiO₂ surface, resulting in a hydrophilic surface again (right bottom). On the other hand, silicone oil grafted on the TiO₂ is stable under UV illumination (5 h exposure to UV-A light with 2 mW/cm⁻²), maintaining the hydrophobicity.

Further, the photocatalytic properties of modified TiO₂ surfaces were tested by decomposition of various organic materials.

Fig. 2 shows the results for a PDMS grafted TiO₂ surface (PDMS 9.7 kDa; illumination with UV-A light for 10 min at 2 mW/cm⁻²) which had been contaminated with Rhodamine B solution. After UV illumination for 10 min, the Rhodamine B dye is decomposed and surface becomes clean again.

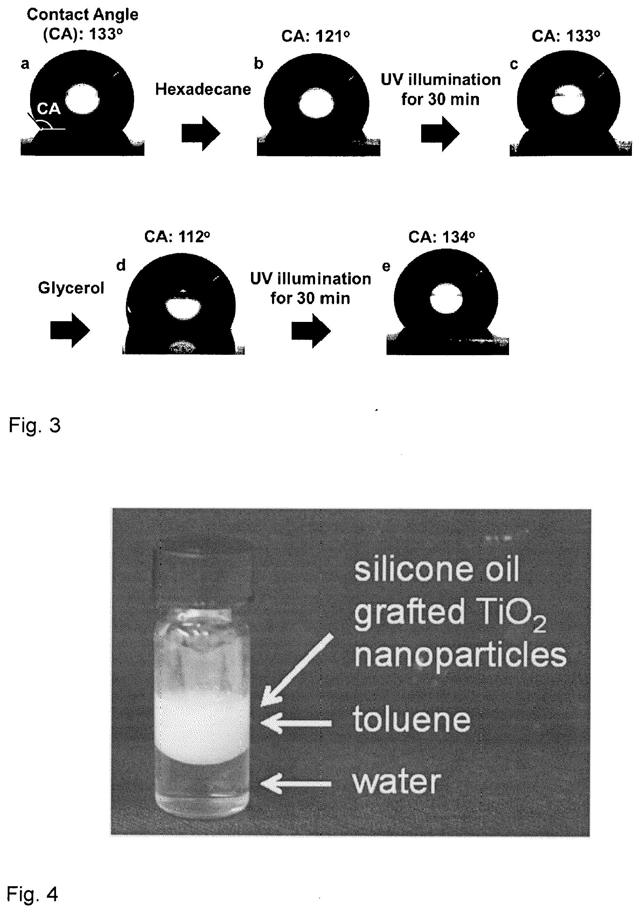

Fig. 3 shows the photodegradation of further organic materials by photocatalytic activity of a silicone oil grafted (PDMS 9.7 kDa; illumination with UV-A light for 10 min at 2 mW/cm⁻²) mesoporous TiO₂ surface. The initial static contact angle of water on the silicone oil grafted mesoporous TiO₂ surface (133°, (a)) was decreased by hexadecane contamination to 121° (b). However after UV illumination for 20 min with 2 mW/cm⁻², the contact angle reverted to 133° (c) by photodegradation of hexadecane through the photocatalytic activity of TiO₂. Glycerol contamination also induced lower contact angle about 112° (d) but UV illumination treatment recovered the contact angle again to 134° by cleaning (or photodegradation) of glycerol with photocatalytic activity of TiO₂.

The results of a further test for the hydrophobicity of the grafted surfaces are shown in Fig. 4.

Fig. 4 demonstrates that silicone oil grafted TiO₂ nanoparticles were only dispersed in toluene due to its hydrophobicity, but not in water.

### EXAMPLE 3

### Preparation of a self-cleaning TiO₂ surface

A TiO₂ surface was covered with polydimethylsiloxane (9.7 kDa) and irradiated with UV-A light for 10 min at 2 mW/cm⁻².

This silicone oil grafted TiO₂ surface still has its photocatalytic activity and remains hydrophobic (as evidenced by Fig. 1 and Fig. 2). Therefore, it can clean the surface by two different mechanisms, including photodegradation. Dust particles are removed by rolling water drops. Since the hydrophobicity is maintained, water drops and the attached dust particles roll off easily. The photocatalytic activity also decomposes oil and soot particles. Therefore, this dual functionality of polysiloxane-grafted photocatalytic metal oxide surfaces allows an advantageous application to various kinds of glasses, metals, fabrics, seramic tiles (for roof, wall, bath, and pool), cement, concrete, and bricks, where an efficient self-cleaning surface is desirable.

### EXAMPLE 4

### Preparation of UV blocking and self-cleaning surfaces, in particular on transparent substrates

Photocatalytic metal oxides (e.g. TiO₂) are transparent for visible light but block UV light. Owing to their good UV blocking property and harmlessness for the human body, they have been widely used for UV blocking products such as sun-block cream and sunglasses. Silicone oil grafted photo-catalytic metal oxides are also transparent but block UV light efficiently with concomitant highly effective self-cleaning properties.

Such a surface can be prepared by first coating a photo-catalytic metal oxide, such as TiO₂, onto the respective substrate (e.g. glass, window, or quartz) with precursor (e.g. TiCl₄ or Ti-butoxide) or nanoparticles, and then grafting polysiloxanes onto the metal oxide surface by light illumination according to the procedure of Example 1.

The resulting polysiloxane-grafted photocatalytic metal oxide surfaces can be used for glasses and all types of windows where both blockage of UV light and self-cleaning property are required or desirable, such as sunglasses, car, train, or airplain glasses, and glasses for building or houses.

### EXAMPLE 5

### Preparation of an anti-fingerprinting surface

The photocatalytic activity of photocatalytic metal oxides has been used for preparing anti-fingerprinting surfaces. It was reported that a mesoporous structure of photocatalytic metal oxides results in better anti-fingerprinting properties. Here, silicone oil (PDMS; 9.7 kDa) was grafted by irradiation with UV-A light for 10 min at 2 mW/cm⁻² on the as-prepared mesoporous TiO₂ structure on the glass, and it was demonstrated that an oil contamination on this surface was effectively decomposed by photocatalytic activity of TiO₂ by UV illumination (Fig. 3). Since the photocatalytic activity of this silicone oil-grafted mesoporous TiO₂ surface is strong enough to decompose oil by UV illumination, fingerprints, mainly consisting of oily and fatty substances, also can be removed from this surface.

### EXAMPLE 6

### Preparation of an anti-biofouling surface

Typically, anti-biofouling action was demonstrated either by killing bacteria using a photocatalyst or by hindering the attachment of biomaterials physically by using polymer brushes. Since polysiloxane-grafted photocatalytic metal oxide surfaces still have the photocatalytic activity of TiO₂ and physical hinderance by grafting silicone oil brushes, more effective anti-biofouling properties by this dual functionality can be achieved. Suitable grafted surfaces can be fabricated by the procedure of Example 1.

### EXAMPLE 7

### Hydrophobic photocatalytic metal oxide particles

The polysiloxane-grafting reaction of the present invention was applied to photocatalytically active metal oxide micro- and nanoparticles, resulting in an improved dispersibility of the coated particles in non-polar solvents. A porous surface composed of photocatalytic TiO₂ nanoparticles was filled with silicone oil (PDMS; 9.7 kDa) and grafted by irradiation with UV-A light for 10 min at 2 mW/cm⁻². After the illumination, residual silicone oil was removed by centrifugation, silicone oil grafted TiO₂ nanoparticles were purified and redispersed in non-polar organic solvent (toluene). Fig. 4 shows the results.

This surface modification of photocatalytic metal oxide particles provides a better processability and flexibility of such photocatalytic micro- and nanoparticles for a broader range of applications.

## Claims

1. A method for grafting polysiloxanes on a surface of a photocatalytically active metal oxide comprising at least the following steps:
a) providing a surface of a photocatalytically active metal oxide;
b) providing a polysiloxane or a mixture of polysiloxanes on the metal oxide surface;
c) irradiating the reaction mixture with light in a wavelength range from 180 nm to 550 nm for a sufficient time to generate reactive moieties in said polysiloxanes and to form covalent Si-O-Me (Me = metal) bonds between said reactive moieties of the polysiloxanes and the metal oxide surface;
d) optionally separating unreacted polysiloxane molecules from the polysiloxane-grafted metal oxide surface;
wherein no silane coupling agent or cross-linking agent needs to be present in the reaction mixture and/or participates in said grafting reaction.

2. The method according to claim 1, wherein no silane coupling agent or cross-linking agent is present in the reaction mixture and/or participates in said grafting reaction.

3. The method according to claim 1 or 2, wherein the photocatalytically active metal oxide comprises or represents a plurality of metal oxides and/or the metal of said photocatalytically active metal oxide comprises or represents a metal alloy.

4. The method according to any one of claims 1 to 3, wherein the metal oxide is selected from the group comprising TiO₂, ZnO₂, SnO2, CeO₂, Fe₂O₃, Ag₂O, WO₃, Al₂O₃, Nb₂O₅, ZnS, CuO, MoO₃, ZrO₂, MnO₂, MgO, and V₂O₅.

5. The method according to any one of claims 1 to 4, wherein the polysiloxane(s) is/are free of functional groups capable to a covalent coupling reaction with the metal oxide surface prior to said irradiation with light.

6. The method according to any one of claims 1 to 5, wherein the polysiloxane comprises or consists of a compound having a repeating element of the general formula -[R₁R₂Si-O-R₃R₄Si]ₙ-, wherein n is an integer from 5 to 5,000,000, preferably from 10 to 50,000, and R₁, R₂, R₃, R₄ independent from each other represent H, halogen, an organic residue, in particular alkyl or (per)fluorinated alkyl, or -OSiR₅R₆R₇, with R₅, R₆, R₇ being substituents as defined for R₁ to R₄.

7. The method according to any one of claims 1-6, wherein the irradiation is performed for a total time period in the range of from 1 second to 120 minutes, preferably from 20 seconds to 30 minutes, more preferred in the range from 30 seconds to 15 minutes, and with an intensity of 0.1 - 10,000 mW/cm⁻², preferably in the range from 0.1 to 100 mW/cm⁻², more preferred in the range from 1 to 60 mW/cm⁻².

8. The method according to any one of claims 1-7, wherein the wavelength range of the light comprises a wavelength corresponding to an absorption band gap of the respective metal oxide(s).

9. The method according to any one of claims 1-8, wherein the metal oxide surface is provided as a film or coating layer on a substrate, in particular a polymer, ceramic, glass, plexiglass, silicone, metal, or composite substrate, or as the surface of a bulk metal oxide material.

10. The method according to any one of claims 1-9, wherein the metal oxide surface is the surface of metal oxide particles or heterogeneous metal oxide containing particles, in particular microparticles or nanoparticles.

11. The method according to any one of claims 1-10, wherein the metal oxide surface is the surface of an article selected from the group comprising fabrics, filters, meshes, glassware, including optical devices such as sunglasses, windows, objectives, lenses, touchpads, furnishings, office-, laboratory-, sanitary- or medical equipment, means of transportation, portable devices, construction/building materials, ceramics, tiles, bricks, concretes, particles of cements, paints.

12. A hydrophobic and photocatalytically active polysiloxane-grafted metal oxide surface wherein the metal oxide is selected from the group comprising TiO₂, ZnO₂, SnO2, CeO₂, Fe₂O₃, Ag₂O, WO₃, Al₂O₃, Nb₂O₅, ZnS, CuO, MoO₃, ZrO₂, MnO₂, MgO, and V₂O₅, the polysiloxane is selected from the group comprising a compound having a repeating element of the general formula -[R₁R₂Si-O-R₃R₄Si]ₙ-, wherein n is an integer from 5 to 5,000,000, preferably from 10 to 50,000, and R₁, R₂, R₃, R₄ independent from each other represent H, halogen, an organic residue, in particular alkyl or (per)fluorinated alkyl, or -OSiR₅R₆R₇, with R₅, R₆, R₇ being substituents as defined for R₁ to R₄, and the polysiloxane graft is provided on the metal oxide as a layer having a thickness in the range from 0.5 nm to 50 nm, preferably in the range from 1 nm to 25 nm, more preferred in the range from 2 nm to 15 nm.

13. The surface according to claim 12, wherein the polysiloxane graft is coupled to the metal oxide surface by direct covalent bonds between the polysiloxane molecules and the metal oxide surface and the polysiloxane graft layer does not comprise any additional linker compound.

14. The surface according to claim 12 or 13, which represents or comprises the surface of a micro- or nanoparticle.

15. An article, in particular a thermo-sensitive and/or acid-sensitive article, comprising the surface according to any one of claims 12-14.

16. The article according to claim 15 which is selected from the group comprising fabrics, filters, meshes, glassware, including optical devices such as sunglasses, windows, objectives, lenses, touchpads, furnishings, office-, laboratory-, sanitary- or medical equipment, means of transportation, portable devices, construction/building materials, ceramics, tiles, bricks, concretes, particles of cements, paints.

17. The surface according to any one of claims 12-14 or the article according to any one of claims 15-16 for use as a biocide, anti-biofouling material, UV-blocker, self-cleaning material, anti-fingerprinting material, building material, photocatalyst, in particular non-polar solvent dispersible photocatalyst.
